# EUROPÄISCHE PATENTSCHRIFT

(11) **EP 0 835 993 B1**
(45) Veröffentlichungstag und Bekanntmachung des Hinweises auf die Patenterteilung: **17.12.2003**
(21) Anmeldenummer: 97116320.9
(22) Anmeldetag: 19.09.1997
(51) Int. Cl.: F01P 5/12, B60T 1/087

(54) **Antriebseinheit mit einem Motor, einem Getriebe und einer Wasserpumpe**
Drive unit comprising an engine, a gearbox and a water pump
Unité de propulsion comportant un moteur, une boîte de vitesses et une pompe à eau

(30) Priorität: 09.10.1996 DE 19641557
(43) Veröffentlichungstag der Anmeldung: 15.04.1998
(73) Patentinhaber: Voith Turbo GmbH & Co. KG, 89522 Heidenheim (DE)
(72) Erfinder: Edelmann, Peter, 89522 Heidenheim (DE); Vogelsang, Klaus, 74564 Crailsheim (DE); Rose, Peter, 89522 Heidenheim (DE); Heilinger, Peter, 74564 Crailsheim (DE)
(74) Vertreter: Dr. Weitzel & Partner

(56) Entgegenhaltungen:
- DE-A- 4 446 288
- DE-A- 19 509 417
- GB-A- 330 671
- US-A- 1 637 382
- US-A- 2 609 800
- US-A- 3 335 823
- US-A- 4 787 868
- PATENT ABSTRACTS OF JAPAN vol. 10, no. 326 (M-532), 6. November 1986 & JP 61 132715 A (YANMAR DIESEL ENGINE), 20. Juni 1986
- VIGNON D: "LE FREINAGE: LES RALENTISSEURS HYDRAULIQUES" REVUE TECHNIQUE DIESEL, Nr. 134, Juli 1985, Seiten 18, 20, 22, 25, 27/28, 30, 32-39, XP002033165 Boulogne-Billancourt,FR

## Beschreibung

Die Erfindung betrifft eine Antriebseinheit mit einem Motor umfassend mindestens eine Motorabtriebswelle, einem dem Motor nachgeordneten Getriebe sowie einem Kühlmittelkreislauf mit wenigstens einer Wasserpumpe.

Antriebseinheiten, insbesondere für Verbrennungsmotoren, wie einleitend dargestellt, sind hinlänglich bekannt.

Bei den bekannten Antriebseinheiten ist die Wasserpumpe immer zwischen Motor und Lüfter angeordnet und meist von einem Riemenantrieb motordrehzahlabhängig angetrieben. Eine motordrehzahlabhängige Pumpe ist für die Kühlung des Motors ideal. Die bekannte Anordnung hat aber den Nachteil, daß neben der Motorabtriebswelle, die in die Kupplung und das Getriebe mündete, eine weitere Welle zum Antrieb der Nebenaggregate am Motor notwendig ist.

Des weiteren sind insbesondere bei schweren Fahrzeugen Retarder bekanntgeworden, die bei Bremsung aus hoher Fahrgeschwindigkeit die anfallende kinetische Bremsenergie aufnehmen und in Wärme umsetzen. Als Betriebsflüssigkeit dieser Retarder diente in der Regel Öl. Die im Retarder an die Betriebsflüssigkeit übergegangene Wärme wurde mittels eines speziellen Wärmetauschers dem Kühlmittel oder der Umgebungsluft zugeführt.

Aus der DE 1 95 09 417 ist des weiteren ein Retarder bekanntgeworden, dessen Arbeitsmedium das Arbeitsmedium des Kühlkreislaufes ist. Dadurch, daß das Kühlmittel auch als Betriebsflüssigkeit des Retarders dient, wird die anfallende Wärme unmittelbar in den dem Kühler zugeleiteten Kühlmittel eingeleitet und ein Wärmetauscher zwischen zwei Flüssigkeiten, wie er beispielsweise bei einer Betriebsweise des Retarders mit einer Ölflüssigkeit notwendig ist, wird hierdurch entbehrlich. Der Retarder, wie er aus der DE 1 95 09 417 bekanntgeworden ist, ist ein sogenannter Sekundärretarder, d. h. die Drehzahl des Retarders ist fahrgeschwindigkeitsabhängig. Ein fahrgeschwindigkeitsabhängig betriebener Retarder stellt in bezug auf das Retarderbremsmoment, das für die Bremsung zur Verfügung steht, ein Optimum dar. Eine derartige Anordnung des Retarders bedingt einen Antrieb des Retarders beispielsweise über einen Abgriff an der getriebeabtriebsseitig angeordneten Gelenkwelle. Somit ist der Retarder in der Nähe des Getriebes angeordnet. Besonders problematisch bei einem fahrgeschwindigkeitsabhängig betriebenen Retarder ist dessen Kühlung. Bei bislang bekannten Retardem war die Kühlung unzureichend, da die Wasserpumpe nicht fahrgeschwindigkeitsabhängig betrieben wurde. Hierdurch war die Verfügbarkeit des Retarders eingeschränkt.

Aufgabe der Erfindung ist es, eine Antriebseinheit zu schaffen, mit der die zuvor geschilderten Nachteile vermieden werden können, insbesondere soll für eine Antriebseinheit, die einen Retarder umfaßt, eine möglichst kompakte Bauweise angegeben werden. Ein weiterer Aspekt der Erfindung ist darin zu sehen, daß die Verfügbarkeit des Retarders möglichst hoch ist.

Erfindungsgemäß wird dies durch die Merkmale des Anspruches 1 gelöst.

Gemäß der Erfindung ist vorgesehen, die Wasserpumpe bzw. falls mehrere vorgesehen sind die Wasserpumpen in Kraftflußrichtung hinter dem Motor anzuordnen und über eine Motorabtriebswelle anzutreiben. Dies kann die Motorabtriebswelle, die zur Kupplung führt, oder aber auch eine seperate Abtriebswelle sein. Für den Motorbetrieb ist es ideal, wenn die Drehzahl der Wasserpumpe zur Motordrehzahl proportional ist. Für den Retarderbetrieb ist es ideal, wenn die Wasserpumpe mit fahrgeschwindigkeitsproportionaler Drehzahl betrieben wird.

Durch die Anordnung der Wasserpumpe gemäß der Erfindung in Kraftflußrichtung hinter dem Motor ist eine kompakte Zusammenfassung der Bauteile Wasserpumpe und Retarder möglich, gegebenenfalls in bevorzugten Ausführungsformen in einem integrierten Bauteil.

In einer besonders kompakten Anordnung wird die Wasserpumpe bzw. die Wasserpumpen zwischen Motor und Getriebe angeordnet. Dies hat kurze Leitungen im Kühlmittelkreislauf zur Folge. In einer weiteren kompakten Bauweise kann vorgesehen sein, die Wasserpumpe bzw. Wasserpumpen direkt am Getriebe oder im Getriebe selbst anzuordnen. Eine besonders raumsparende Bauform ergibt sich, wenn solche Wasserpumpen zusammen mit dem Getriebe von einer gemeinsamen Wand umgeben werden und eine Baueinheit bilden.

Gemäß der Erfindung ist vorgesehen, daß die Antriebseinheit einen hydrodynamischen Retarder umfaßt, um insbesondere bei Bremsungen aus hoher Fahrgeschwindigkeit die anfallende kinetische Bremsenergie aufnehmen und in Wärme umsetzen zu können.

Eine besonders günstige Kombination gemäß der Erfindung ist die folgende: Retarder und Wasserpumpe sind Bestandteil eines einzigen Kreislaufs; der genannte Kreislauf ist zugleich ein Kühlkreislauf, beispielsweise Kühlkreislauf des Motors;
alle Bauteile sind weitgehend integriert, möglichst zu einer einzigen Baueinheit.

Dies hat die folgenden Merkmale zur Voraussetzung: Die Wasserpumpe sollte motordrehzahlabhängig betrieben werden; der Retarder sollte fahrgeschwindigkeitsabhängig betrieben werden; um den Retarder für gewisse Bremszustände optimal auszunutzen, sollte eine fahrgeschwindigkeitsabhängige Pumpe zusätzlich vorgesehen werden.

Vorzugsweise handelt es sich bei dem hydrodynamischen Retarder um einen sogenannten Sekundärretarder, wie er beispielsweise aus der DE 1 95 09 417 bekannt ist. Es sind aber auch Primärretarder, wie beispielsweise aus der DE 44 40 162 bekannt, denkbar. Die Sekundärretarder werden bevorzugt von einer fahrgeschwindigkeitsabhängigen Welle, beispielsweise der Gelenkwelle, die vom Getriebe zum Hinterachsgetriebe führt, angetrieben.

Eine besonders kompakte Bauweise ergibt sich, wenn der Retarder am oder im Getriebe angeordnet ist Bevorzugt wird bei einer derartigen Anordnung der Retarder und das Getriebe von einer gemeinsamen Wand umgeben und diese bilden eine Baueinheit. Hierdurch wird das Bauvolumen erheblich reduziert. In einer noch kompakteren Bauweise kann vorgesehen sein, daß Wasserpumpe und Retarder von einer gemeinsamen Wand umgeben werden und eine Baueinheit bilden. Diese, aus Wasserpumpe und Retarder gebildete Baueinheit, kann wiederum am oder im Getriebe angeordnet sein. Es ist aber auch denkbar, eine derartige Baueinheit an oder im Kupplungsgehäuse anzuordnen.

In einer ersten Ausführungsform der Erfindung ist vorgesehen, daß das Kühlmittel des Kühlmittelkreislaufes und das Arbeitsmedium des Retarders voneinander getrennt sind, und das Arbeitsmedium des Retarders beispielsweise Öl ist. Besonders bevorzugt ist aber, daß das Kühlmittel des Kühlmittelkreislaufes zugleich Arbeitsmedium des Retarders ist. Vorzugsweise bietet sich als Kühlmittel und Arbeitsmedium Wasser bzw. die üblichen Wasser-Glykol-Gemische an. Der Kühlmittelkreislauf und der Arbeitsmediumkreislauf des Retarders können bei gleichem Kühl- bzw. Arbeitsmittel einen gemeinsamen Kreislauf ausbilden, was zum Vorteil hat, daß die im Retarder anfallende Wärme über das Kühlmittel und den Kühler schnell abgeführt werden kann.

Um zu verhindern, daß im Fahrbetrieb der Retarder mitläuft und gegen die Antriebsmaschine arbeitet, was unnötigerweise Energie erfordert, ist vorgesehen, bei einem gemeinsamen Kreislauf von Arbeitsmedium und Kühlmittel, ein Umschaltventil und eine Bypassleitung vorzusehen. Im Fahrbetrieb kann das Umschaltventil dann die Bypassleitung öffnen und das Kühlmittel bzw. das Arbeitsmedium des Retarders am Retarder vorbeiströmen, wo hingegen im Bremsbetrieb das Umschaltventil dafür sorgt, daß das Kühl- bzw. Arbeitsmedium des Retarders diesen durchströmt und so die erforderliche Bremsleistung zur Verfügung gestellt sowie die dabei anfallende Wärme abgeführt wird.

Die Erfindung soll nunmehr nachfolgend anhand der Zeichnungen beispielhaft beschrieben werden.

Es zeigen:
Fig. 1 eine erfindungsgemäße Antriebseinheit mit motorabtriebsseitig angeordneter Wasserpumpe;
Fig. 2 eine Antriebseinheit gemäß Fig. 1 mit am Getriebe angeordneter Wasserpumpe;
Fig. 3 die Prinzipskizze einer Antriebseinheit mit einer Wasserpumpe und einem Retarder sowie gemeinsamem Kühlmittelkreislauf;
Fig. 4 eine kompakte Anordnung der prinzipmäßig in Fig. 3 dargestellten mit Wasserpumpe und Retarder am Getriebe;
Fig. 5 eine Anordnung gemäß Fig. 3 mit Wasserpumpe und Retarder integriert in einem gemeinsamen Gehäuse;
Fig. 6 eine Antriebseinheit mit einer motorabtriebsseitig angeordneten Wasserpumpe sowie einem am Getriebe angebrachten Sekundärretarder;
Fig. 7 eine Ausführungsform mit Wasserpumpe und Retarder, integriert in einem Gehäuse, das im Getriebe angeordnet ist;
Fig. 8 eine weitere Ausführungsform der Anordnung gemäß Fig. 7 mit motordrehzahlabhängiger Pumpe im Getriebe.

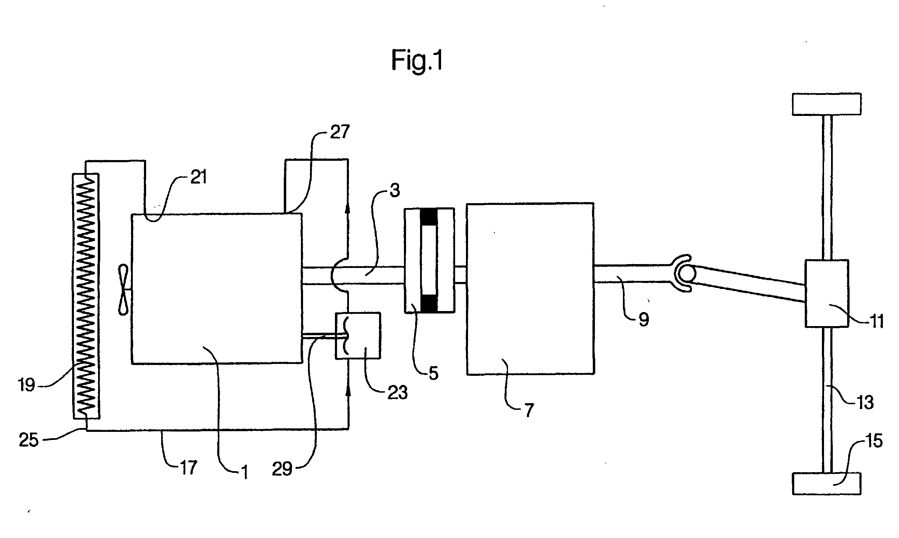

In Fig. 1 ist eine Antriebseinheit gemäß der Erfindung dargestellt

Die Antriebseinheit umfaßt einen Motor 1, der vorzugsweise ein Verbrennungsmotor ist. Motorabtriebsseitig ist eine durch den Motor angetriebene Motorabtriebswelle 3 angeordnet, die in eine Kupplung 5 führt. An die Kupplung 5 schließt sich ein Getriebe 7 an, das mit der Kupplung über die Motorabtriebswelle 3 in Triebverbindung steht. Getriebeabtriebsseitig ist eine Gelenkwelle 9 angeordnet, mit der das Motormoment, nachdem es im Getriebe übersetzt wurde, auf ein Hinterachsgetriebe 11 übertragen, von dort auf die Hinterachse 13 verzweigt und dann auf die Antriebsräder 15 des Fahrzeuges übertragen wird. Der erfindungsgemäß integrierte Retarder ist nicht dargestellt, ebensowenig die gemeinsame Baueinheit gemäß Anspruch 1.

Die Kühlung des Verbrennungsmotores 1 erfolgt mittels eines Kühlmittels, vorzugsweise Wasser mit den bekannten Zusätzen, wie beispielsweise Glykol als Frostschutz.

Das Kühlmittel zirkuliert in einem Kühlmittelkreislauf 17. Im Kühlmittelkreislauf 17 ist ein Kühler 19, bespielsweise ein Lamellenkühler, angeordnet, in dem die nach Austritt aus dem Motor 1 über die Austrittsöffnung 21 austretende, erwärmte Kühlflüssigkeit abgekühlt wird. Die abgekühlte Kühlflüssigkeit wird mittels der Wasserpumpe 23 über die Kühleraustrittsleitung 25 zum Kühlmitteleingang 27 in den Verbrennungsmotor 1 gefördert. Erfindungsgemäß ist die Wasserpumpe 23 in Kraftflußrichtung hinter dem Motor, motorabtriebsseitig, angeordnet und zwar in vorliegendem speziellen Fall zwischen dem Motor 1 und dem Getriebe 7. Selbstverständlich könnte die in Kraftflußrichtung hinter dem Motor angeordnete Wasserpumpe auch hinter dem Getriebe 7 liegen. Die Wasserpumpe 23 wird über eine motorabtriebsseitige Welle 29 angetrieben. Die Welle 29 kann entweder direkt oder übersetzt mit der Kurbelwelle des Motors oder aber mit der Motorabtriebswelle 3 verbunden sein. Dies bedeutet, daß die Wasserpumpe immer in Abhängigkeit von der Motordrehzahl angetrieben wird, entweder falls keine Übersetzung erfolgt, direkt mit der Motordrehzahl oder aber entsprechend dem Übersetzungsverhältnis, was für den Motorbetrieb den Idealfall darstellt. Die vorliegende Anordnung zeichnet sich insbesondere dadurch aus, daß auf diese Art und Weise eine sehr kompakte Antriebseinheit geschaffen werden kann, bei der die Frontseite des Motors nicht durch Nebenaggregate, wie beispielsweise die Wasserpumpe verbaut ist. Dies ermöglicht eine leichte Zugänglichkeit zu Motor 1, was wiederum besonders niedrige Wartungskosten zur Folge hat.

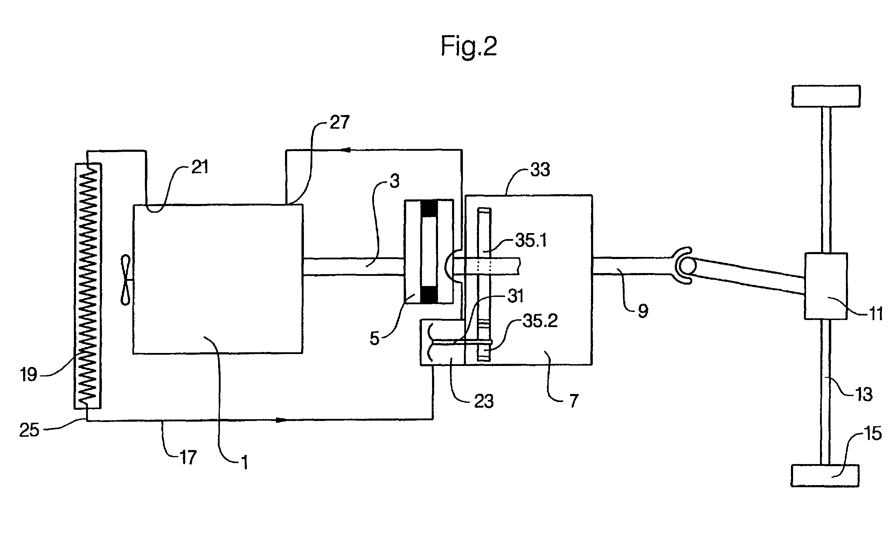

In einer weitergebildeten Ausführungsform gemäß Fig. 2, bei der für gleiche Bauteile dieselben Bezugsziffem wie in Fig. 1 verwendet werden, ist die Wasserpumpe 23 direkt am Getriebe 7 angeordnet. Der Antrieb der Wasserpumpe 23 erfolgt motorabtriebsseitig dadurch, daß die Welle 31 für die Wasserpumpe 23 mit der Motorabtriebswelle 3 gekoppelt ist. In vorliegendem Beispiel geschieht dies dadurch, daß auf die Motorabtriebswelle 3 innerhalb des Getriebegehäuses 33 ein Zahnrad 35.1 aufgebracht ist, das mit dem Zahnrad 35.2, das auf der Welle 31 der Wassepumpe sitzt, in Eingriff steht. Durch entsprechende Ausbildung der Zahnräder 35.1, 35.2 kann die Drehzahl der Motorabtriebswelle in dem gewünschten Maß übersetzt und damit an die erforderliche Pumpleistung angepaßt werden.

Die Ausführungsform gemäß Fig. 2 zeichnet sich insbesondere dadurch aus, daß die Wasserpumpe direkt am Getriebegehäuse angeordnet ist und erfindungsgemäß die Trennwand zwischen Wasserpumpe und Getriebe entfallen kann, so daß Wasserpumpe und Getriebe von nur einer einzigen Gehäusewand beispielsweise der Gehäusewand 33 umgeben werden. Dies stellt eine besonders kompakte und kostengünstige Ausführungsform gemäß der vorliegenden Erfindung dar.

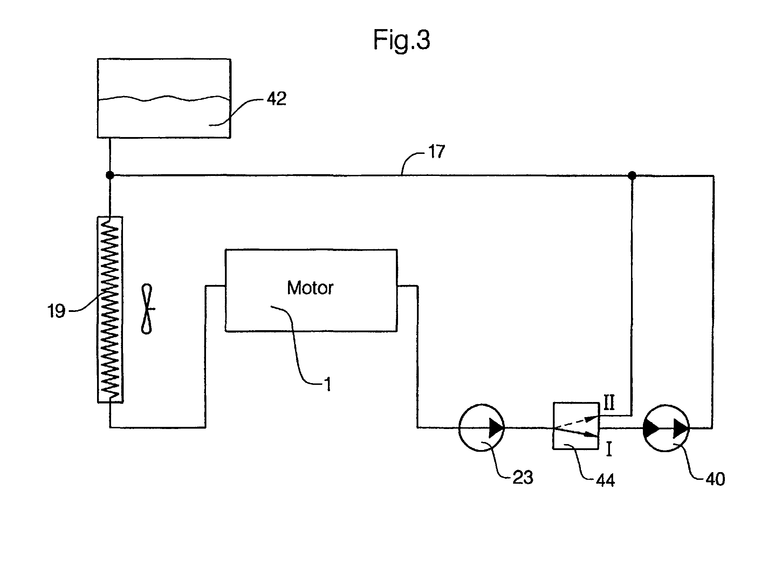

In Fig. 3 ist nunmehr ein Prinzipschaltbild einer Anordnung dargestellt, bei der erfindungsgemäß mittels eines Retarders 40 Bremsenergie für das Fahrzeug aufgebaut werden kann. Im Prinzipschaltbild gemäß Fig. 3 ist lediglich der Motor sowie der Kühlkreislauf 17 mit den dazugehörigen Aggregaten gezeigt. Der Kühlkreislauf 17 umfaßt einen Kühler 19 sowie eine in Kraftflußrichtung hinter dem Motor angeordnete Wasserpumpe 23. Um sicherzustellen, daß die Wasserpumpe 23 immer die erforderliche Kühlmittelmenge durch den Kühlmittelkreislauf 17 fördert, ist ein Ausgleichsbehälter 42 vorgesehen, der an der Saugseite der Pumpe einen bestimmten Druck zur Verfügung stellt.

Hinter der Wasserpumpe 23 ist im Kühlmittelkreislauf ein Umschaltventil 44 vorgesehen, daß zwischen zwei Positionen ① und ② hin und her geschaltet werden kann. In Position ① stellt das Umschaltventil 44 eine leitende Verbindung zum in den Kühlmittelkreislauf eingebrachten Retarder 40 her, dessen Arbeitsmedium das Kühlmedium ist. Das Kühlmedium wird durch den Retarder gefördert und steht dort als Arbeitsmedium im Bremsbetrieb zur Verfügung. Die Verwendung des Ventils 44 erlaubt es somit, den Retarder 40 wahlweise mit Arbeitsmedium zu beschicken oder dieses in der Stellung ② am Retarder vorbeizuleiten. Auf diese Art und Weise ist gewährleistet, daß das Arbeitsmedium, das in vorliegendem Fall die Kühlmittelflüssigkeit ist, beim Nichtbremsbetrieb weitgehend verlustarm umläuft, wo hingegen im Bremsbetrieb die im Retarder anfallende Wärme über das Kühlmittel abgeführt und an die Umgebung im Kühler 19 abgegeben werden kann. Im Prinzip ist in dem vorliegenden Fall der Kühlmittelkreislauf 17 in zwei Kühlkreisläufe geteilt. Der erste Kreislauf ist gebildet aus folgenden Elementen: Pumpe 23, Ventil 44, Kühler 19 und Motor 1 sowie die zwischen diesen Aggregaten befindlichen Leitungsabschnitte. Dieser Kreislauf wird beim Nichtbremsbetrieb benutzt.

Der zweite Kreislauf ist aus den folgenden Aggregaten gebildet: Pumpe 23, Ventil 44, Retarder 40, Kühler 19 und Motor 1 sowie aus den zugehörenden Leitungsabschnitten. Dieser Kreislauf wird beim Bremsbetrieb benutzt. Das Kühlmedium hat dabei sowohl die Funktion eines Arbeitsmediums im Retarder und eines Kühlmediums.

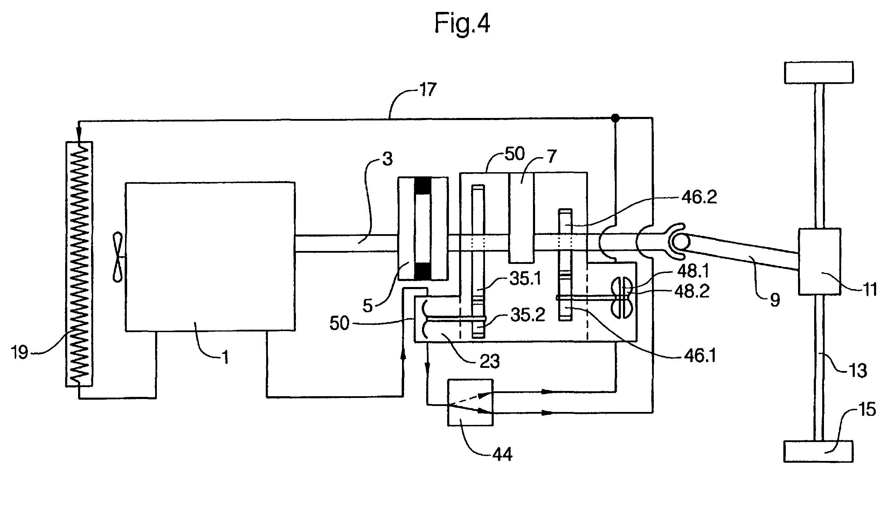

In Fig. 4 ist eine mögliche Anordnung eines Kühlsystems gemäß Fig. 3 in einer Fahrzeugantriebseinheit dargestellt. Wiederum sind gleiche Bauteile wie in Fig. 3 mit gleichen Bezugsziffem bezeichnet.

Die Ausführungsform gemäß Fig. 4 zeichnet sich insbesondere durch eine kompakte Bauweise aus. Dabei ist an der dem Motor zugewandten Seite des Getriebes die Wasserpumpe 23 angeordnet, die vorliegend mit Motordrehzahl, beispielsweise über die Zahnräder 35.1, 35.2, angetrieben wird und somit motordrehzahlabhängig betrieben wird. Der an der Motor abgewandten Seite des Getriebes angeordnete Retarder 40 ist mit der getriebeabtriebsseitigen Gelenkwelle 9 verbunden, beispielsweise wie schon die Wasserpumpe über Zahnräder 46.1, 46.2. Aufgrund dieser Anordnung wird der hydrodynamische Retarder, der ein Statorschaufelrad 48.2 und ein Rotorschaufelrad 48.1 umfaßt, ständig fahrgeschwindigkeitsabhängig angetrieben. Bei dem Retarder 40 handelt es sich also um einen Sekundärretarder. Umschaltventil 44 ermöglicht es, das Kühlmittel, das zugleich Arbeitsmedium des Retarders ist, entweder durch den Retarder zu leiten, was im Bremsbetrieb der Fall ist, oder daran vorbei im Nichtbremsbetrieb. Wie in Fig. 4 dargestellt, umschließt in der kompakten Bauweise eine einzige Gehäusewand 50 das Getriebe 7 sowie die Wasserpumpe 23 und den Retarder 40. Dies ermöglicht eine besonders platzsparende Bauweise.

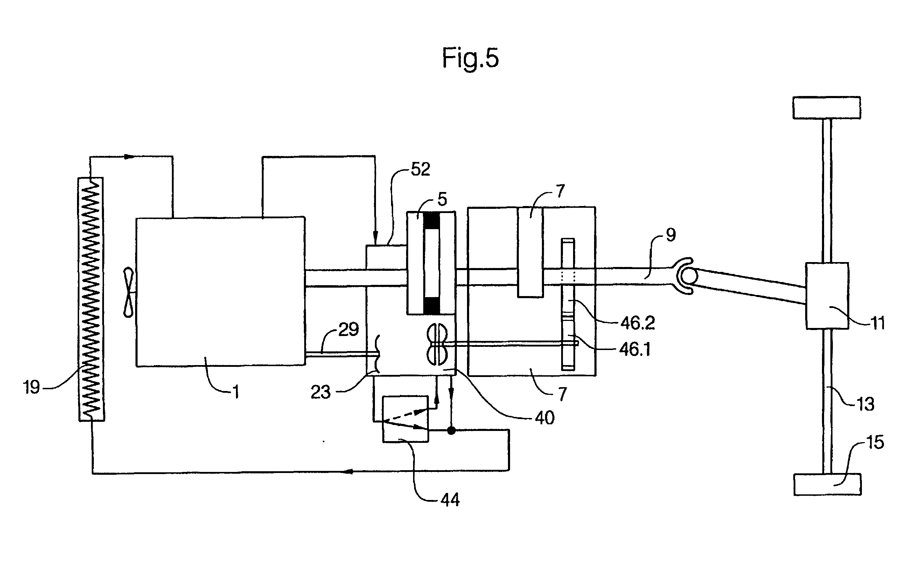

Eine andere Anordnung der in Fig. 3 schematisch dargestellten zeigt Fig. 5. Gemäß Fig. 5 sind die Wasserpumpe 23 und der Retarder 40 von einer gemeinsamen Gehäusewand 52 umgeben und direkt an der Kupplung 5 zwischen Motor und Getriebe angeordnet. In dieser kompakten Bauweise sind also die beiden wasserdurchflossenen Elemente zusammengefaßt. Die Wasserpumpe 23 im gemeinsamen Bauteil wird mittels einer seperaten Welle 29 wie schon bei Fig. 1 dargestellt motordrehzahlabhängig angetrieben, wo hingegen der Retarder 40 fahrgeschwindigkeitsabhängig angetrieben wird. In vorliegendem Beispiel ist dies dadurch realisiert, daß die Retarderwelle über einen Zahnradsatz 46.1, 46.2 an die getriebeabtriebsseitig austretende Gelenkwelle 9 angeschlossen ist. Die erfindungsgemäße Integration des Getriebes gemäß Anspruch 1 ist nicht dargestellt.

Wie schon bei Fig. 5 ist zum Umschalten zwischen den beiden Kühlkreisläufen ein Umschaltventil 44 für Nichtbremsbetrieb und Bremsbetrieb vorgesehen. Der Vorteil der Anordnung gemäß Fig. 5 liegt wie bereits oben erwähnt darin, daß die kühlmittelführenden Bauteile in einer einzigen Baueinheit zusammengefaßt sind, die von einem gemeinsamen Gehäuse 52 umgeben werden. Dies läßt einen sehr leichten Ausbau bei Servicearbeiten zu.

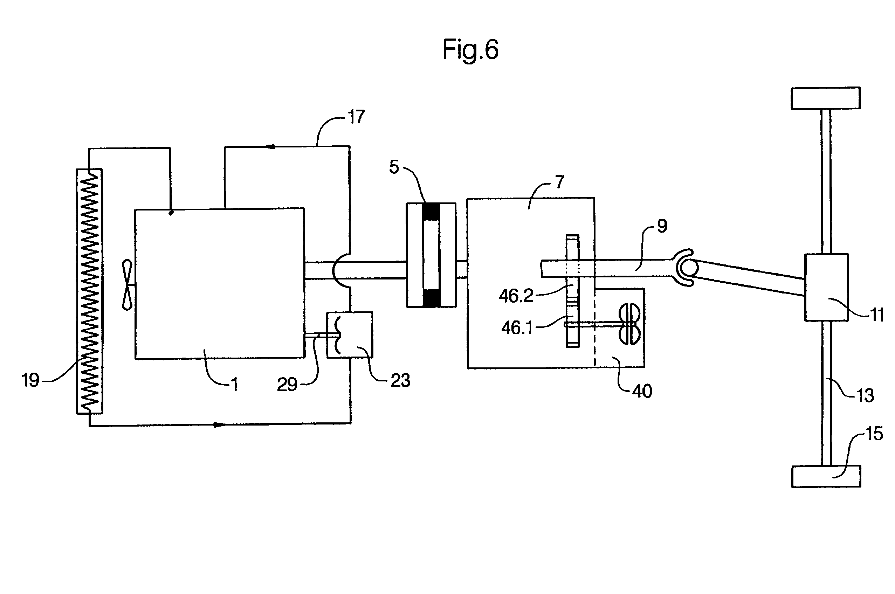

Fig. 6 zeigt eine weitere Anordnung einer Antriebseinheit mit einem Retarder, der im Gegensatz zu den Figuren 3 - 5 und abweichend von der Erfindung gemäß Anspruch 1 nicht mit dem Kühlmittelkreislauf 17 verbunden ist. Das Arbeitsmedium des Retarders ist also vom Kühlmittel getrennt und kann jedwedes geeignetes Arbeitsmedium, beispielsweise auch Öl, sein.

Wieder ist die Wasserpumpe 23 in Kraftflußrichtung hinter dem Motor wie in Fig. 1 angeordnet und wird motordrehzahlabhängig über Welle 29 angetrieben. Der Retarder ist direkt an das Getriebe 7 angesetzt und wird fahrgeschwindigkeitsabhängig angetrieben, wiederum wie bereits in den vorliegenden Ausführungsformen dadurch, daß die Welle des Retarders über einen Zahnradsatz 46.1, 46.2 mit der getriebeabtriebsseitigen Gelenkwelle 9 verbunden ist. In einer besonders kompakten Ausführungsform ist die Gehäusewand des Getriebes 7 zugleich Gehäusewand des Retarders 40.

Sämtliche in den Fig. 3-6 gezeigten motordrehzahlabhängig betriebenen Wasserpumpen könnten auch bei entsprechender Ankopplung an beispielsweise die getriebeabtriebsseitige Gelenkwelle über einen Zahnradsatz auch fahrgeschwindigkeitsabhängig betrieben werden, so daß im Retarderbetrieb eine optimale Kühlung gewährleistet wäre und damit auch eine hohe Verfügbarkeit.

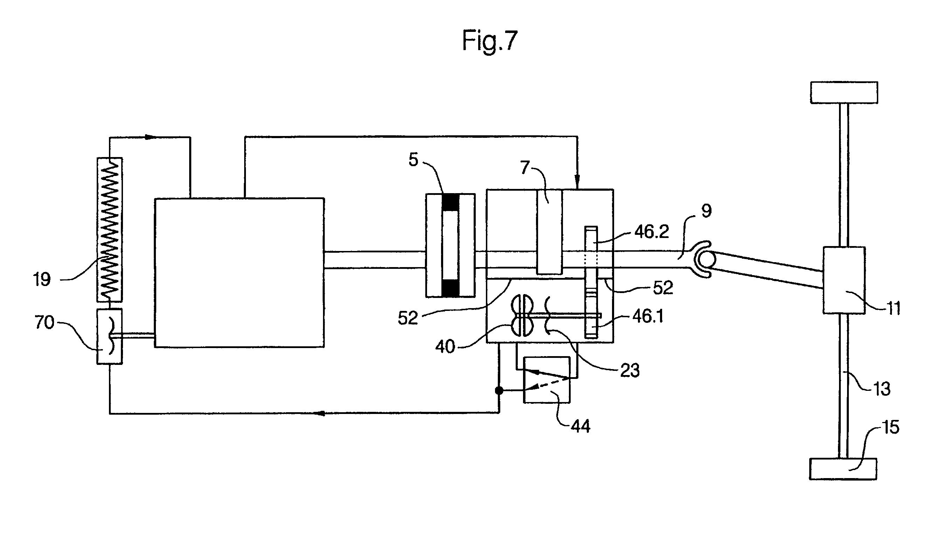

Fig. 7 zeigt eine derartige Anordnung, die jedoch nicht durch die Erfindung gemäß Anspruch 1 erfaßt wird. Der Retarder wird über einen Zahnradsatz 46.1, 46.2 fahrgeschwindigkeitsabhängig angetrieben. Auf dem Rotor des Retarders 40 ist ein Pumpenschaufelrad einer Wasserpumpe 23 angeordnet. Damit wird die Wasserpumpe 23 fahrgeschwindigkeitsabhängig betrieben. Dies ist in bezug auf die Kühlleistung, die im Retarderbetrieb zur Verfügung gestellt wird, besonders vorteilhaft. Wieder ist ein Umschaltventil 44 vorgesehen, um den Kühlmittelfluß, wie bereits zuvor beschrieben, führen zu können.

Während in dem in Fig. 7 dargestellten Ausführungsbeispiel Wasserpumpe und Retarder funktionell getrennt sind, kann in einer Abwandlung der Erfindung vorgesehen sein, daß Wasserpumpe und Retarder funktionell von ein und demselben Bauteil dargestellt werden, d.h. der Retarder die Funktion der Wasserpumpe, wie beispielsweise aus der DE-A-44 36 344.3 bekannt, mit übernimmt.

Um eine ausreichende Kühlung des Motors im Motorbetrieb zu gewährleisten, kann mit Vorteil eine zweite, motordrehzahlabhängige Wasserpumpe 70, z.B. an der Motorvorderseite, vorgesehen sein.

Vorteilhafterweise ist die aus Waasserpumpe 23 und Retarder 40 gebildete Baueinheit von einer gemeinsamen Gehäusewand 52 umgeben und innerhalb des Getriebegehäuses angeordnet.

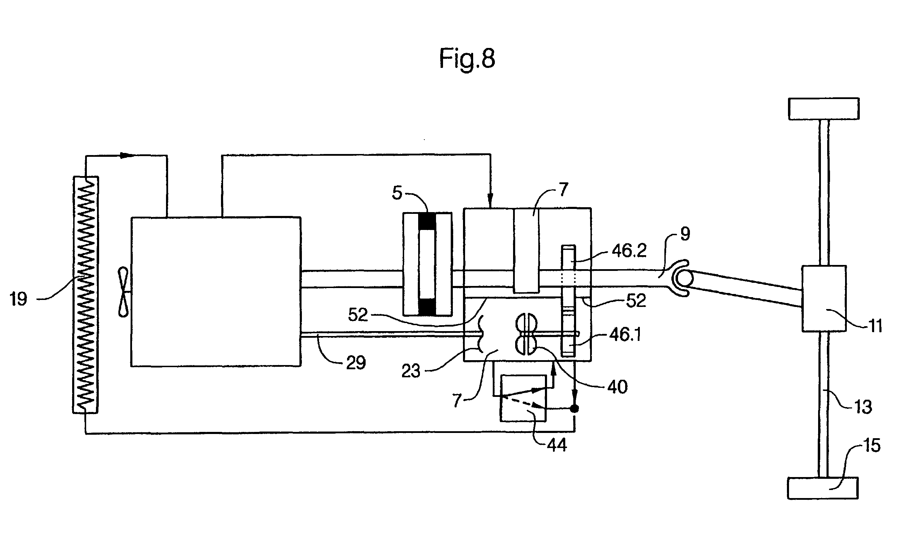

In Fig. 8 ist eine weitere Ausführungsform der Erfindung dargestellt, bei der die Wasserpumpe motordrehzahlabhängig über Welle 29 angetrieben wird.

Die vorliegende Erfindung zeigt somit erstmals Möglichkeiten für eine kompakte Anordnung einer Antriebseinheit mit einer Wasserpumpe sowie mit einem Retarder auf.

## Patentansprüche

1. Antriebseinheit mit
1.1 einem Motor (1), umfassend mindestens eine Motorantriebswelle (3);
1.2 einem dem Motor (1) nachgeordneten Getriebe (7);
1.3 einem Motorkühlmittelkreislauf (17) mit die motordrehzahlproportional angetrieben ist einer Wasserpumpe (23), und einem hydrodynamischen Retarder (40) mit einem Stator (48.2) und einem Rotor (48.1), **dadurch gekennzeichnet, dass**
1.4 die motordrehzahlproportional angetriebene Wasserpumpe (23) in Kraftflußrichtung gesehen hinter dem Motor (1) angeordnet ist, und
1.5 wenigstens die motordrehzahlproportional angetriebene Wasserpumpe (23), der Retarder (40) und das Getriebe (7) eine integrierte Baueinheit bilden;
1.6 wobei die von der Wasserpumpe (23), Retarder (40) und Getriebe (7) gebildete Baueinheit von einer gemeinsamen Wand (50) umgeben ist.

2. Antriebseinheit nach Anspruch 1, **dadurch gekennzeichnet, daß** eine zusätzliche Wasserpumpe fahrgeschwindigkeitsproportional angetrieben ist.

3. Antriebseinheit nach einem der Ansprüche 1 bis 2, **dadurch gekennzeichnet, daß** die Wasserpumpe/n am Getriebe angeordnet ist/sind.

4. Antriebseinheit nach einem der Ansprüche 1 bis 3, **dadurch gekennzeichnet, daß** die Wasserpumpe/n im Getriebe angeordnet ist/sind.

5. Antriebseinheit nach einem der Ansprüch 1 bis 4, **dadurch gekennzeichnet, daß** die mindestens eine Wasserpumpe funktionell vom hydrodynamischen Retarder dargestellt wird.

6. Antriebseinheit nach einem der Ansprüche 1 bis 4, **dadurch gekennzeichnet, daß** die mindestens eine Wasserpumpe und der hydrodynamische Retarder funktionell getrennt sind.

7. Antriebseinheit gemäß einem der Ansprüche 1 bis 6, **dadurch gekennzeichnet, daß** der hydrodynamische Retarder von einer fahrgeschwindigkeitsabhängigen Welle angetrieben ist.

8. Antriebseinheit nach einem der Ansprüche 1 bis 6, **dadurch gekennzeichnet, daß** der hydrodynamische Retarder von einer motordrehzahlabhängigen Welle angetrieben ist.

9. Antriebseinheit gemäß einem der Ansprüche 1 bis 8, **dadurch gekennzeichnet, daß** der Retarder am Getriebe angeordnet ist.

10. Antriebseinheit nach einem der Ansprüche 1 bis 8, **dadurch gekennzeichnet, daß** der Retarder im Getriebe angeordnet ist.

11. Antriebseinheit gemäß einem der Ansprüche 1 bis 10, **dadurch gekennzeichnet, daß** das Kühlmittel eines Kühlmittelkreislaufes und das Arbeitsmedium des Retarders voneinander getrennt sind.

12. Antriebseinheit gemäß einem der Ansprüche 1 bis 4 und 6 bis 11, **dadurch gekennzeichnet, daß** das Arbeitsmedium des Retarders Öl ist.

13. Antriebseinheit gemäß einem der Ansprüche 1 bis 11, **dadurch gekennzeichnet, daß** das Kühlmittel eines Kühlmittelkreislaufes zugleich Arbeitsmedium des Retarders ist.

14. Antriebseinheit gemäß Anspruch 13, **dadurch gekennzeichnet, daß** das Kühlmittel eines Kühlmittelkreislaufes und das Arbeitsmedium des Retarders Wasser oder ein Wassergemisch ist

15. Antriebseinheit gemäß einem der Ansprüche 1 bis 14, **dadurch gekennzeichnet, daß** der Arbeitsmediumkreislauf des Retarders mit einem Kühlmittelkreislauf einen gemeinsamen Kreislauf bildet.

16. Antriebseinheit gemäß Anspruch 15, **dadurch gekennzeichnet, daß** der gemeinsame Kreislauf eine Bypaßleitung aufweist sowie ein Umschaltventil, derart, daß Kühlmittel bzw. Arbeitsmedium des Retarders am Retarder wenigstens teilweise vorbeiströmen kann.

## Claims

1. A drive unit with
1.1 an engine (1), comprising at least one drive shaft (3);
1.2 a gear (7) connected downstream of the engine (1);
1.3 an engine coolant circulation (17) with a water pump (23) which is driven proportionally to the engine speed, and a hydrodynamic retarder (40) with a stator (48.2) and a rotor (28.1), **characterized in that**
1.4 the water pump (23) which is driven proportionally to the engine speed is arranged behind the engine (1) as seen in the direction of the power flux, and
1.5 at least the water pump (23) which is driven proportionally to the engine speed, the retarder (40) and the gear (7) form an integrated unit;
1.6 with the unit formed by the water pump (23), the retarder (40) and the gear (7) being enclosed by a common wall (50).

2. A drive unit as claimed in claim 1, **characterized in that** an additional water pump is driven proportional to the driving speed.

3. A drive unit as claimed in claim 1 to 2, **characterized in that** the water pump(s) is/are arranged on the gear.

4. A drive unit as claimed in one of the claims 1 to 3, **characterized in that** the water pump(s) is/are arranged in the gear.

5. A drive unit as claimed in one of the claims 1 to 4, **characterized in that** the at least one water pump is functionally realized by the hydrodynamic retarder.

6. A drive unit as claimed in one of the claims 1 to 4, **characterized in that** the at least one water pump and the hydrodynamic retarder are functionally separated.

7. A drive unit as claimed in one of the claims 1 to 6, **characterized in that** the hydrodynamic retarder is driven by a shaft dependent on the driving speed.

8. A drive unit as claimed in one of the claims 1 to 6, **characterized in that** the hydrodynamic retarder is driven by a shaft dependent on the engine speed.

9. A drive unit as claimed in one of the claims 1 to 8, **characterized in that** the retarder is arranged on the gear.

10. A drive unit as claimed in one of the claims 1 to 8, **characterized in that** the retarder is arranged in the gear.

11. A drive unit as claimed in one of the claims 1 to 10, **characterized in that** the coolant of a coolant circulation and the working medium of the retarder are separated from each other.

12. A drive unit as claimed in one of the claims 1 to 4 and 6 to 11, **characterized in that** the working medium of the retarder is oil.

13. A drive unit as claimed in one of the claims 1 to 11, **characterized in that** the coolant of a coolant circulation is simultaneously the working medium of the retarder.

14. A drive unit as claimed in claim 13, **characterized in that** the coolant of a coolant circulation and the working medium of the retarder are water or a water mixture.

15. A drive unit as claimed in one of the claims 1 to 14, **characterized in that** the working medium circulation of the retarder forms a common circulation with a coolant circulation.

16. A drive unit as claimed in claim 15, **characterized in that** the common circulation comprises a bypass conduit as well as a changeover valve, such that the coolant or working medium of the retarder can flow past the retarder at least partially.

## Revendications

1. Unité d'entraînement avec :
1.1 un moteur (1) comprenant au moins un arbre d'entraînement de moteur (3) ;
1.2 un engrenage (7) monté en aval du moteur (1) ;
1.3 un circuit de fluide de refroidissement du moteur (17) avec une pompe (23) entraînée de façon proportionnelle à la vitesse de rotation du moteur et avec un retardateur hydrodynamique (40) pourvu d'un stator (48.2) et d'un rotor (48.1),
**caractérisée en ce que**
1.4 la pompe (23) entraînée de façon proportionnelle à la vitesse de rotation du moteur est disposée en arrière du moteur (1) dans le sens d'écoulement de la force,
et **en ce que**
1.5 au moins la pompe (23) entraînée de façon proportionnelle à la vitesse de rotation du moteur, le retardateur (40) et l'engrenage (7) forment une unité constructive intégrée ;
1.6 l'unité constructive formée par la pompe à eau (23), le retardateur (40) et l'engrenage (7) étant entourée par une paroi commune (50).

2. Unité d'entraînement selon la revendication 1, **caractérisée en ce qu'**une pompe à eau supplémentaire est entraînée de manière proportionnelle à la vitesse de marche.

3. Unité d'entraînement selon l'une quelconque des revendications 1 à 2, **caractérisée en ce que** la (les) pompe(s) est (sont) disposée(s) sur l'engrenage.

4. Unité d'entraînement selon l'une quelconque des revendications 1 à 3, **caractérisée en ce que** la (les) pompe(s) est (sont) disposée(s) dans l'engrenage.

5. Unité d'entraînement selon l'une quelconque des revendications 1 à 4, **caractérisée en ce que** la pompe à eau au nombre d'une au moins est représentée du point de vue fonctionnel par le retardateur hydrodynamique.

6. Unité d'entraînement selon l'une quelconque des revendications 1 à 4, **caractérisée en ce que** la pompe à eau au nombre d'une au moins et le retardateur hydrodynamique sont séparés du point de vue fonctionnel.

7. Unité d'entraînement selon l'une quelconque des revendications 1 à 6, **caractérisée en ce que** le retardateur hydrodynamique est entraîné par un arbre asservi à la vitesse de marche.

8. Unité d'entraînement selon l'une quelconque des revendications 1 à 6, **caractérisée en ce que** le retardateur hydrodynamique est entraîné par un arbre asservi à la vitesse de rotation du moteur.

9. Unité d'entraînement selon l'une quelconque des revendications 1 à 8, **caractérisée en ce que** le retardateur est disposé sur l'engrenage.

10. Unité d'entraînement selon l'une quelconque des revendications 1 à 8, **caractérisée en ce que** le retardateur est disposé dans l'engrenage.

11. Unité d'entraînement selon l'une quelconque des revendications 1 à 10, **caractérisée en ce que** le fluide de refroidissement d'un circuit de fluide de refroidissement et le fluide de travail du retardateur sont séparés l'un de l'autre.

12. Unité d'entraînement selon l'une quelconque des revendications 1 à 4 et 6 à 11, **caractérisée en ce que** le fluide de travail du retardateur est de l'huile.

13. Unité d'entraînement selon l'une quelconque des revendications 1 à 11, **caractérisée en ce que** le fluide de refroidissement d'un circuit de fluide de refroidissement est en même temps le fluide de travail du retardateur.

14. Unité d'entraînement selon la revendication 13, **caractérisée en ce que** le fluide de refroidissement d'un circuit de fluide de refroidissement et le fluide de travail du retardateur sont de l'eau ou un mélange à base d'eau.

15. Unité d'entraînement selon l'une quelconque des revendications 1 à 14, **caractérisée en ce que** le circuit de fluide de travail du retardateur forme un circuit commun avec un circuit de fluide de refroidissement.

16. Unité d'entraînement selon la revendication 15, **caractérisée en ce que** le circuit commun comprend une conduite de dérivation ainsi qu'une vanne de commutation, de telle sorte que le fluide de refroidissement ou le fluide de travail du retardateur puisse au moins partiellement contourner le retardateur.
